# EUROPEAN PATENT APPLICATION

(11) **EP 4 712 294 A1**
(43) Date of publication of application: **18.03.2026**
(21) Application number: 23961289.8
(22) Date of filing: 28.12.2023
(51) Int. Cl.: H02J 7/00, H02H 7/18, H01M 10/44

(54) **CONTROL METHOD AND SYSTEM FOR LOGICAL LOW BATTERY THRESHOLD-BASED PROTECTION OVER ENERGY STORAGE SYSTEM**

(30) Priority: 15.12.2023 CN 202311734714
(71) Applicant: Suzhou Qiancheng New Energy Technology Co., Ltd., Suzhou, Jiangsu 215101 (CN)
(72) Inventor: DING, Jiajie, Suzhou, Jiangsu 215101 (CN); CHEN, Ganfeng, Suzhou, Jiangsu 215101 (CN)
(74) Representative: Bayramoglu et al.
(86) International application number: PCT/CN2023/142647
(87) International publication number: WO 2025/123434

(57) **Abstract**

This application provides a control method and system for low-power logic threshold protection of an energy storage system. The method includes: reading a charging/discharging instruction state of a battery of the energy storage system; determining a real-time state of the battery based on the charging/discharging instruction state of the battery; determining, based on the real-time state of the battery, whether a remaining capacity of the battery is less than a preset low-power threshold; and performing low-power logic threshold protection control management on the battery of the energy storage system if the remaining capacity of the battery is less than the preset low-power threshold. In this way, the real-time state of the battery is determined based on the charging/discharging instruction state of the battery of the energy storage system; whether the remaining capacity of the battery is less than the preset low-power threshold is determined based on the real-time state of the battery; and low-power logic threshold protection control management may be performed on the battery of the energy storage system when the remaining capacity of the battery is less than the preset low-power threshold, thereby resolving a problem that an existing energy storage system employs a singular control method with incomplete systematic protection for the energy storage system and without an active protection capability.

## Description

This application claims priority to Chinese Patent Application No. 202311734714.0, filed with the China National Intellectual Property Administration on December 15, 2023 and entitled "CONTROL METHOD AND SYSTEM FOR LOW-POWER LOGIC THRESHOLD PROTECTION OF ENERGY STORAGE SYSTEM", which is incorporated herein by reference in its entirety.

### TECHNICAL FIELD

This application relates to the field of computer technologies, and in particular, to a control method and system for low-power logic threshold protection of an energy storage system.

### BACKGROUND

Currently, with the development of the photovoltaic and wind power generation industries, as a cutting-edge energy storage technology, energy storage systems have seen increasingly widespread applications in photovoltaic and wind power generation, grid frequency regulation, and other systems. A logic control instruction unilaterally issued by an existing energy storage battery-based BMS system lacks active protection control logic and employs a singular control method, resulting in incomplete systematic protection for an energy storage system and absence of an active protection capability. This is not conducive to maintenance of physical discharging characteristics of the energy storage battery. The singular control method may lead to a failure in timely charging for the battery during power supply restoration on a user side, persistent battery self-discharge, BMS system downtime, and even irreversible damage to cell characteristics. Therefore, a control method for low-power logic threshold protection of an energy storage system is needed urgently, to resolve a problem that an existing energy storage system employs a singular control method with incomplete systematic protection for the energy storage system and without an active protection capability.

### SUMMARY

This application provides a control method for low-power logic threshold protection of an energy storage system, to resolve a problem that an existing energy storage system employs a singular control method with incomplete systematic protection for the energy storage system and without an active protection capability. In this way, a real-time state of a battery is determined based on a charging/discharging instruction state of the battery of the energy storage system; whether a remaining capacity of the battery is less than a preset low-power threshold is determined based on the real-time state of the battery; and low-power logic threshold protection control management is performed on the battery of the energy storage system when the remaining capacity of the battery is less than the preset low-power threshold, thereby resolving the problem that an existing energy storage system employs a singular control method with incomplete systematic protection for the energy storage system and without an active protection capability.

According to a first aspect, an embodiment of this application provides a control method for low-power logic threshold protection of an energy storage system. The method includes:
reading a charging/discharging instruction state of a battery of the energy storage system;
determining a real-time state of the battery based on the charging/discharging instruction state of the battery;
determining, based on the real-time state of the battery, whether a remaining capacity of the battery is less than a preset low-power threshold; and
performing low-power logic threshold protection control management on the battery of the energy storage system if the remaining capacity of the battery is less than the preset low-power threshold.

Optionally, the step of performing low-power logic threshold protection control management on the battery of the energy storage system if the remaining capacity of the battery is less than the preset low-power threshold includes:
performing low-power discharging prohibition protection control management on the battery of the energy storage system and determining whether a charging condition is met if the remaining capacity of the battery is less than a preset first low-power threshold; and
maintaining low-power operation for timely user control management if the charging condition is not met and energy needs to be continuously provided.

Optionally, after the step of maintaining low-power operation for timely user control management if the charging condition is not met and energy needs to be continuously provided, the method further includes:
requesting a forced charging state and determining whether the charging condition is met if the battery continuously provides energy and the remaining capacity of the battery is less than a preset second low-power threshold; and
sending a low-power discharging prohibition protection control management instruction to the energy storage system if the charging condition is not met and the forced charging state is requested, where the preset second low-power threshold is less than the preset first low-power threshold.

Optionally, after the step of requesting a forced charging state and determining whether the charging condition is met if the battery continuously provides energy and the remaining capacity of the battery is less than a preset second low-power threshold, the method further includes:
entering a forced charging loop counting state and charging the battery to reach and maintain the preset first low-power threshold if the charging condition is met and the forced charging state is requested; and
continuously implementing, by the system, the low-power discharging prohibition protection control management instruction after the remaining capacity of the battery reaches and is maintained at the preset first low-power threshold and the charging condition remains continuously unmet.

Optionally, before the step of entering a forced charging loop counting state and charging the battery to reach and maintain the preset first low-power threshold if the charging condition is met and the forced charging state is requested, the method further includes:
determining, when the battery is in a charging state, whether the battery is in the forced charging state;
counting the forced charging state if the battery is in the forced charging state to obtain a forced charging count value;
determining a count value of a last discharging state of the battery when the battery is in a discharging state; and
determining the forced charging loop counting state of the battery based on the forced charging count value and the count value of the last discharging state of the battery.

Optionally, after the step of continuously implementing, by the system, the low-power discharging prohibition protection control management instruction after the remaining capacity of the battery reaches and is maintained at the preset first low-power threshold and the charging condition remains continuously unmet, the method further includes:
clearing a forced charging loop count and restoring charging/discharging control after the remaining capacity of the battery reaches and is maintained at the preset first low-power threshold and when the charging condition is met.

According to a second aspect, an embodiment of this application further provides a control system for low-power logic threshold protection of an energy storage system, configured to perform the control method for low-power logic threshold protection of an energy storage system provided in the embodiments of this application.

According to a third aspect, an embodiment of this application provides a real-time operating system for an embedded computer in a hybrid energy storage inverter, including: a hardware computer platform and a control system for low-power logic threshold protection of an energy storage system, where the hardware computer platform is provided with an energy management system, and the control system for low-power logic threshold protection of an energy storage system provided in the embodiments of this application is embedded into the management system of the hardware computer platform.

According to a fourth aspect, an embodiment of this application provides an electronic device, including a memory, a processor, and a computer program that is stored in the memory and that is capable of running on the processor, where when the processor executes the computer program, the steps in the control method for low-power logic threshold protection of an energy storage system provided in the embodiments of this application are implemented.

According to a fifth aspect, an embodiment of this application provides a computer-readable storage medium, where the computer-readable storage medium stores a computer program, and when the computer program is executed by a processor, the steps in the control method for low-power logic threshold protection of an energy storage system provided in the embodiments of this application are implemented.

In the embodiments of this application, the charging/discharging instruction state of the battery of the energy storage system is read; the real-time state of the battery is determined based on the charging/discharging instruction state of the battery; whether the remaining capacity of the battery is less than the preset low-power threshold is determined based on the real-time state of the battery; and low-power logic threshold protection control management is performed on the battery of the energy storage system if the remaining capacity of the battery is less than the preset low-power threshold. In this way, the real-time state of the battery is determined based on the charging/discharging instruction state of the battery of the energy storage system; whether the remaining capacity of the battery is less than the preset low-power threshold is determined based on the real-time state of the battery; and low-power logic threshold protection control management is performed on the battery of the energy storage system when the remaining capacity of the battery is less than the preset low-power threshold, thereby resolving a problem that an existing energy storage system employs a singular control method with incomplete systematic protection for the energy storage system and without an active protection capability.

### BRIEF DESCRIPTION OF THE DRAWINGS

To describe the technical solutions in the embodiments of this application or in the conventional technology more clearly, the following briefly describes the accompanying drawings required for describing the embodiments or the conventional technology. Clearly, the accompanying drawings in the following description show merely some embodiments of this application, and a person of ordinary skill in the art may still derive other accompanying drawings from these accompanying drawings without creative efforts.
FIG. 1 is a flowchart of a control method for low-power logic threshold protection of an energy storage system according to an embodiment of this application;
FIG. 2 is a flowchart of another control method for low-power logic threshold protection of an energy storage system according to an embodiment of this application;
FIG. 3 is a curve graph of a forced charging loop counting state according to an embodiment of this application;
FIG. 4 is a diagram of a modularized structure of a control method for low-power logic threshold protection of an energy storage system according to an embodiment of this application;
FIG. 5 is a flowchart of another control method for low-power logic threshold protection of an energy storage system according to an embodiment of this application;
FIG. 6 is a waveform diagram of a logic control instruction unilaterally issued by an energy storage battery-based BMS system according to an embodiment of this application;
FIG. 7 is a diagram of an effect of a control method for low-power logic threshold protection of an energy storage system according to an embodiment of this application;
FIG. 8 is a schematic diagram of a structure of a control system for low-power logic threshold protection of an energy storage system according to an embodiment of this application;
FIG. 9 is a schematic diagram of a structure of a real-time operating system for an embedded computer in a hybrid energy storage inverter according to an embodiment of this application; and
FIG. 10 is a schematic diagram of a structure of an electronic device according to an embodiment of this application.

SOC is a remaining capacity of a battery, BMS is a battery pack, PCS is an inverter, and EMS is an energy management system.

### DETAILED DESCRIPTION OF THE EMBODIMENTS

The following clearly and completely describes the technical solutions in the embodiments of this application with reference to the accompanying drawings in the embodiments of this application. Clearly, the described embodiments are merely some rather than all of the embodiments of this application. All other embodiments obtained by a person of ordinary skill in the art based on the embodiments of this application without creative efforts shall fall within the protection scope of this application.

### Embodiment 1

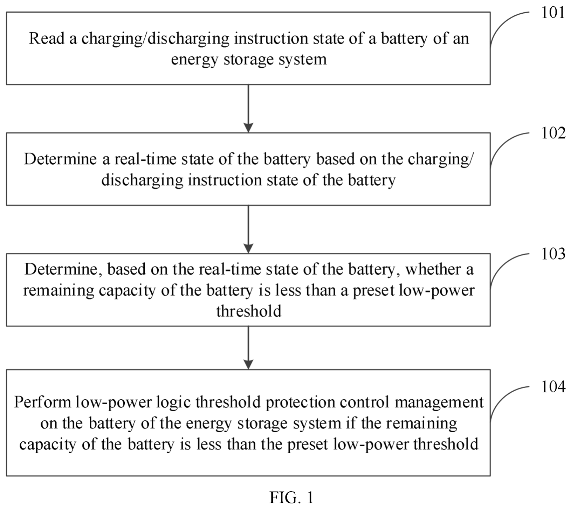

As shown in FIG. 1, FIG. 1 is a flowchart of a control method for low-power logic threshold protection of an energy storage system according to an embodiment of this application. The control method for low-power logic threshold protection of an energy storage system includes the following steps.

101: Read a charging/discharging instruction state of a battery of the energy storage system.

In this embodiment of this application, the control method for low-power logic threshold protection of an energy storage system is applied to an active protection system EMS of an inverter, and is an important part of process control of a PCS of the energy storage system in the new energy technology industry.

The energy storage system is a new energy storage system, and can store electric energy.

The charging/discharging instruction state of the battery includes a charging instruction state and a discharging instruction state of the battery.

It should be noted that an objective of reading the charging/discharging instruction state of the battery of the energy storage system is to learn charging and discharging situations of the battery.

102: Determine a real-time state of the battery based on the charging/discharging instruction state of the battery.

In this embodiment of this application, the real-time state of the battery is recognized and monitored based on the charging/discharging instruction state of the battery when the battery is in a charging/discharging state.

The real-time state of the battery includes but is not limited to a current, a voltage, a SOC, and an alarm flag bit of a BMS.

Specifically, information such as a terminal voltage, a temperature, a charging/discharging current, and a total voltage of a battery pack is collected in real time based on the charging/discharging instruction state of the battery.

103: Determine, based on the real-time state of the battery, whether a remaining capacity of the battery is less than a preset low-power threshold.

In this embodiment of this application, the preset low-power threshold may be understood as a low-power threshold preset in the system. Specifically, the preset low-power threshold may be a threshold indicating that a power is less than 15% to 6% of a total power, or may be a threshold indicating that a power is less than 10% to 4% of a total power.

The remaining capacity of the battery refers to a remaining power of the battery. For example, if a rated capacity of a battery is 1000 mA, a threshold with a power being 15% to 6% of a total power can be understood as that a capacity of the battery is a threshold of 150 mA to 60 mA..

Further, when a power of the battery is less than the preset low-power threshold of the system, the system gives a corresponding alarm, prompts that the power is insufficient, and prompts a user to charge.

104: Perform low-power logic threshold protection control management on the battery of the energy storage system if the remaining capacity of the battery is less than the preset low-power threshold.

In this embodiment of this application, the preset low-power threshold is a low-power threshold preset in the system, and may be a threshold less than 15% to 6% of the total power or a threshold less than 10% to 4% of the total power.

The low-power logic threshold protection control management refers to a threshold protection control management process in which discharging is prohibited when the battery has a low power.

In a possible embodiment, when the remaining capacity of the battery is less than a preset first low-power threshold 15%, low-power discharging prohibition protection control management is performed on the battery of the energy storage system, and whether the system meets a charging condition is determined. When the charging condition is not met, the system maintains low-power operation to prompt the user for timely control management. If the charging condition remains continuously unmet and the battery continuously provides the system with energy, and when the remaining capacity of the battery reaches a preset second low-power threshold 6%, a low-power discharging prohibition protection control management instruction is continuously implemented to continuously perform management on the energy storage system, until a charging condition for a battery pack is met next time, thereby preventing the battery from being over-discharged.

In another possible embodiment, when the remaining capacity of the battery is less than a preset first low-power threshold 10%, low-power discharging prohibition protection control management is performed on the battery of the energy storage system, and whether the system meets a charging condition is determined. When the charging condition is not met, the system maintains low-power operation to prompt the user for timely control management. If the charging condition remains continuously unmet and the battery continuously provides the system with energy, and when the remaining capacity of the battery reaches a preset second low-power threshold 4%, the battery requests a forced charging state. When the charging condition is met and the battery issues a forced charging request, the battery is charged to ensure that the battery is charged. If the charging condition remains continuously unmet, a low-power discharging prohibition protection control management instruction is continuously implemented for the battery of the energy storage system, until a charging condition for a battery pack is met next time, thereby preventing the battery from being over-discharged, preventing cyclic charging and discharging in a short time from causing serious damage to health of a battery cell of the battery pack, and avoiding irreversible damages such as shortening a service life of the battery.

It should be noted that the preset second low-power threshold is less than the preset first low-power threshold.

It should be noted that, when the remaining capacity of the battery is less than a preset first low-power threshold, the low-power discharging prohibition protection control management instruction is implemented for the battery of the energy storage system. If the remaining capacity of the battery reaches a preset second low-power threshold due to low-power operation, the low-power discharging prohibition protection control management instruction is continuously implemented for the battery of the energy storage system, until the charging condition for the battery pack is met next time, thereby preventing the battery from being over-discharged and preventing cyclic charging and discharging in a short time from causing an irreversible damage to the battery pack.

In this embodiment, the charging/discharging instruction state of the battery of the energy storage system is read; the real-time state of the battery is determined based on the charging/discharging instruction state of the battery; whether the remaining capacity of the battery is less than the preset low-power threshold is determined based on the real-time state of the battery; and low-power logic threshold protection control management is performed on the battery of the energy storage system if the remaining capacity of the battery is less than the preset low-power threshold. In this way, the real-time state of the battery is determined based on the charging/discharging instruction state of the battery of the energy storage system; whether the remaining capacity of the battery is less than the preset low-power threshold is determined based on the real-time state of the battery; and low-power logic threshold protection control management may be performed on the battery of the energy storage system when the remaining capacity of the battery is less than the preset low-power threshold, thereby resolving a problem that an existing energy storage system employs a singular control method with incomplete systematic protection for the energy storage system and without an active protection capability.

Optionally, the step of performing low-power logic threshold protection control management on the battery of the energy storage system if the remaining capacity of the battery is less than the preset low-power threshold may include: performing low-power discharging prohibition protection control management on the battery of the energy storage system if the remaining capacity of the battery is less than a preset first low-power threshold; and maintaining low-power operation for timely user control management if the charging condition is not met and energy needs to be continuously provided.

In this embodiment of this application, the remaining capacity of the battery may be understood as a residual capacity of the battery, for example, may be a remaining capacity level of the battery.

The preset first low-power threshold may be less than 15% or 10% of the total power.

Further, when the remaining capacity of the battery is less than 15% of the total power, low-power discharging prohibition protection control management is performed on the battery of the energy storage system; or when the remaining capacity of the battery is less than 10% of the total power, low-power discharging prohibition protection control management is performed on the battery of the energy storage system, thereby avoiding damage caused by over-discharging of the battery.

"The charging condition is not met" includes but is not limited to separation from an AC-side power grid, separation from a PV-side photovoltaic panel, and the charging condition being not met on a PV side.

The low-power discharging prohibition protection control management may be understood as a control management manner in which the system prohibits discharging to prevent the battery from being damaged when the power of the battery is less than a threshold preset in the system.

It should be noted that when the remaining capacity of the battery is less than 15% or 10% and the charging condition is not met, and when the energy is continuously provided, low-power operation needs to be maintained, and the user is prompted in a timely manner for charging, thereby avoiding damage caused by over-discharging of the battery.

Optionally, after the step of maintaining low-power operation for timely user control management if the charging condition is not met and energy needs to be continuously provided, the method may further include: requesting a forced charging state and determining whether the charging condition is met if the battery continuously provides energy and the remaining capacity of the battery is less than a preset second low-power threshold; and sending a low-power discharging prohibition protection control management instruction to the energy storage system if the charging condition is not met and the forced charging state is requested, where the preset second low-power threshold is less than the preset first low-power threshold.

In this embodiment of this application, the preset second low-power threshold is less than the preset first low-power threshold.

The preset second low-power threshold may be 6%, 5%, or 4% of the total power.

The forced charging state refers to a state in which the battery requests forced charging.

It should be noted that, when the remaining capacity of the battery is less than 15% or 10%, the energy is continuously provided, and when the remaining capacity of the battery reaches 6%, 5%, or 4%, forced charging is requested for the battery. When the charging condition is not met and the forced charging state is requested, the battery is preferably charged, to achieve an objective of power maintaining. In addition, the system continuously implements a low-power discharging prohibition protection control management instruction until the charging condition for the battery pack is met next time, thereby preventing over-discharging of the battery from causing irreversible damage to the battery pack.

Optionally, after the step of requesting a forced charging state and determining whether the charging condition is met if the battery continuously provides energy and the remaining capacity of the battery is less than a preset second low-power threshold, the method may further include: entering a forced charging loop counting state and charging the battery to reach and maintain the preset first low-power threshold if the charging condition is met and the forced charging state is requested; and continuously implementing, by the system, the low-power discharging prohibition protection control management instruction after the remaining capacity of the battery reaches and is maintained at the preset first low-power threshold and the charging condition remains continuously unmet.

In this embodiment of this application, the forced charging loop counting state may be understood as follows: When the charging condition is met and the battery requests the forced charging state, a forced charging instruction is completed once. After a power threshold is reached and maintained, if the energy still needs to be output for user control, energy outputting causes the remaining capacity of the battery to reach the preset second low-power threshold; and when the charging condition is met and the forced charging state is continuously requested, the forced charging instruction is completed once again. By that analogy, after one forced charging loop is completed, when the charging condition is met and the forced charging state is continuously requested, the forced charging loop is counted and marked.

The forced charging loop counting state may be specifically an active protection measure for the battery, which performs logic control on charging/discharging of the battery when a discharging state of the battery reaches a low-power threshold, thereby preventing the battery from being over-discharged.

"The charging condition is met" includes but is not limited to connection to an AC-side power grid, connection to a PV-side photovoltaic panel, and the charging condition being met on a PV side.

Further, when the charging condition is met and the battery issues a forced charging request, the battery is preferably charged, to maintain an existing power of the battery.

It should be noted that, after the remaining capacity of the battery reaches and is maintained at the preset first low-power threshold, when the charging condition remains continuously unmet, the system continuously implements a low-power discharging prohibition protection control management instruction until the charging condition for the battery pack is met next time, thereby preventing the battery from being over-discharged, preventing cyclic charging and discharging in a short time from causing serious damage to health of a battery cell, preventing a service life of the battery from being shortened, and avoiding irreversible damage to the battery pack.

Optionally, before the step of entering a forced charging loop counting state and charging the battery to reach and maintain the preset first low-power threshold if the charging condition is met and the forced charging state is requested, the method may further include: determining, when the battery is in a charging state, whether the battery is in the forced charging state; counting the forced charging state if the battery is in the forced charging state to obtain a forced charging count value; determining a count value of a last discharging state of the battery when the battery is in a discharging state; and determining the forced charging loop counting state of the battery based on the forced charging count value and the count value of the last discharging state of the battery.

In this embodiment of this application, the forced charging state means that the battery requests forced charging, and the forced charging count value refers to a value obtained by counting the forced charging state.

The count value of the last discharging state of the battery may be understood as a value obtained by performing counting on a remaining power of the battery during last time of discharging.

The forced charging loop counting state may be understood as follows: When the charging condition is met and the battery requests the forced charging state, a forced charging instruction is completed once. After the preset first low-power threshold is reached and maintained, if the user still needs to output the energy, energy outputting causes the remaining capacity of the battery to reach the preset second low-power threshold; and forced charging is continuously requested, and the forced charging instruction is completed once again. By that analogy, after one forced charging loop is completed, when the charging condition is met and the forced charging state is continuously requested, the forced charging loop is counted and marked.

It should be noted that the forced charging loop counting state may be specifically an active protection measure for the battery, which performs logic control on charging/discharging of the battery when a discharging state of the battery reaches a low-power threshold, thereby preventing the battery from being over-discharged.

Optionally, after the step of continuously implementing, by the system, the low-power discharging prohibition protection control management instruction after the remaining capacity of the battery reaches and is maintained at the preset first low-power threshold and the charging condition remains continuously unmet, the method further includes: clearing a forced charging loop count and restoring charging/discharging control after the remaining capacity of the battery reaches and is maintained at the preset first low-power threshold and when the charging condition is met.

In this embodiment of this application, the preset first low-power threshold may be less than 15% or 10% of the total power.

"The charging condition is met" includes but is not limited to connection to an AC-side power grid, connection to a PV-side photovoltaic panel, and the charging condition being met on a PV side.

The forced charging loop count may be used to perform an active protection measure for the battery, which performs logic control on charging/discharging of the battery when a discharging state of the battery reaches a low-power threshold, thereby preventing the battery from being over-discharged.

It should be noted that the forced charging loop count is cleared and charging/discharging control is restored after the remaining capacity of the battery reaches and is maintained at 15% or 10% of the total power and when the charging condition is met.

In this embodiment of this application, this application can enhance safety and sustainability of critical factors in process control for a new energy storage system, and assist different battery manufacturers/BMS in selecting efficient and healthy energy responses driven by sustainable development. While not completely relying on a BMS system of a supply chain enterprise, this application can still determine a specific safety protection strategy for customers, and also provides reliable energy data for the sustainable new energy storage system: detection data, repair activation, and rationality estimation. Through this application, potential safety hazards that may arise from short-term frequent charging/discharging of an energy storage battery pack are eliminated, including but not limited to high-temperature flammability, explosion, and battery health degradation.

### Embodiment 2

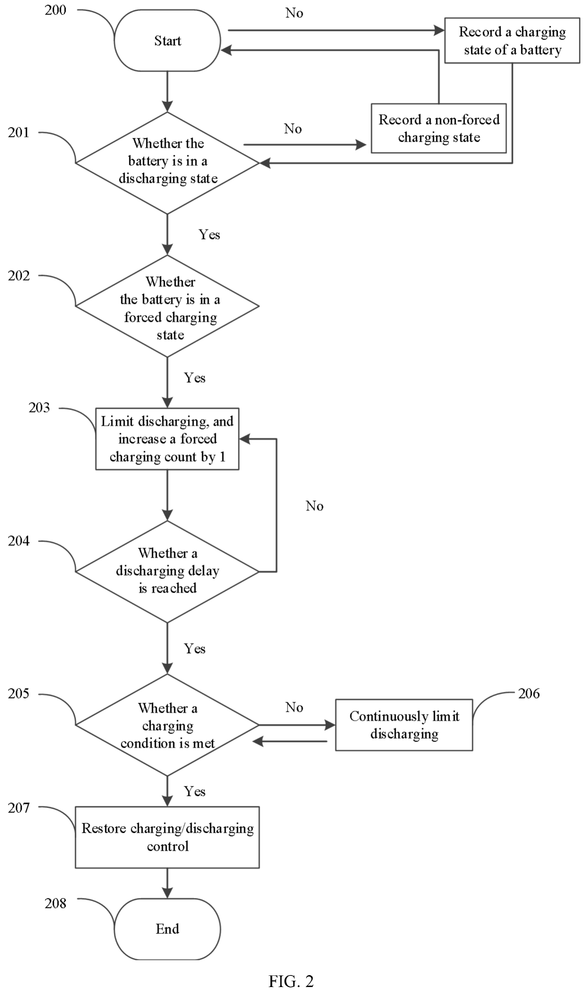

In this embodiment, refer to FIG. 2, which is a flowchart of another control method for low-power logic threshold protection of an energy storage system according to an embodiment of this application. The method specifically includes the following steps.

200: Start.

201: Whether a battery is in a discharging state?

Step 202 is performed if the battery is in the discharging state; otherwise, a charging state of the battery is recorded and step 202 is performed.

202: Whether the battery is in a forced charging state?

Step 203 is performed if the battery is in the forced charging state; otherwise, a non-forced charging state is recorded and step 201 is performed.

203: Limit discharging, and increase a forced charging count by 1.

When a power of the battery is less than a specified threshold, discharging is limited; and when the power reaches a lower threshold, forced charging is requested for the battery, and the forced charging count is increased by 1.

The specified threshold may be understood as a low-power threshold set in a system, and may be less than 15% or 10% of a total power; and the lower threshold may be 6%, 5%, or 4% of the total power.

204: Whether a discharging delay is reached?

Step 205 is performed if the discharging delay is reached; otherwise, step 204 is performed.

205: Whether a charging condition is met?

Step 207 is performed if the charging condition is met; otherwise, step 206 is performed. "The charging condition is not met" includes but is not limited to separation from an AC-side power grid, separation from a PV-side photovoltaic panel, and the charging condition being not met on a PV side.

206: Continuously limit discharging.

When the charging condition remains continuously unmet, a low-power discharging prohibition protection control management instruction is continuously implemented until a charging condition for a battery pack is met next time, thereby preventing the battery from being over-discharged, preventing cyclic charging and discharging in a short time from causing serious damage to health of a battery cell of a battery pack, and preventing a service life of the battery from being shortened.

207: Restore charging/discharging control.

Charging/discharging control is restored if the charging condition is met.

208: End.

In this application, low-power logic threshold protection may be performed for charging/discharging of the battery when the battery is discharged to reach the low-power threshold, thereby preventing the battery from being over-discharged.

### Embodiment 3

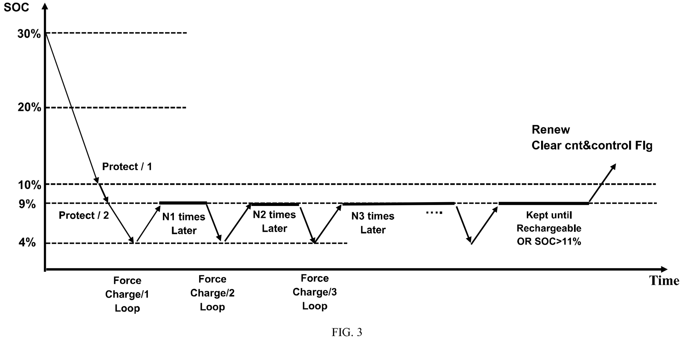

In this embodiment, refer to FIG. 3, which is a curve graph of a forced charging loop counting state according to an embodiment of this application. When a remaining capacity of a battery is less than a specified threshold, a low-power discharging prohibition protection control management instruction is responded to. In this case, whether a charging condition is met is determined. If the charging condition is not met, low-power operation is maintained for timely response to user control. When the charging condition remains continuously unmet, energy is continuously provided, and a lower threshold is reached, forced charging is requested for the battery, and a mark 1 is given. When the charging condition is met and the battery issues a forced charging request, the battery is charged to achieve an objective of power maintaining. After one time of forced charging is completed and a power threshold is reached and maintained, a mark 2 is given. If a user control instruction still indicates to continuously output energy, low-power logic threshold protection control management is performed on an energy storage system based on the mark 1 and the mark 2.

Specifically, the specified threshold in FIG. 3 may be specifically 10% of a total power; and the lower threshold may be specifically 4% of the total power.

Further, when the mark 1 appears, a value of the mark 2 is 1 after being increased by 1. The low-power discharging prohibition protection control management instruction is continuously implemented (the system does not allow the battery to output energy any more) and ends at an N1 time interval point. By that analogy, when one forced charging loop is completed, and when the mark 1 appears and the value of the mark 2 is 2 after being increased by 1, the low-power discharging prohibition protection control management instruction is continuously implemented and ends at an N2 time interval point. When the charging condition remains continuously unmet, the system continuously implements the low-power discharging prohibition protection control management instruction until a charging condition for a battery pack is met next time. When the battery pack meets the charging condition and a power of the battery increases to exceed 11% of the total power, a forced charging loop count is cleared and charging/discharging control is restored, thereby preventing the battery from being over-discharged, preventing cyclic charging and discharging in a short time from causing serious damage to health of a battery cell of the battery pack, and avoiding irreversible damages such as shortening a service life of the battery.

In this embodiment, N is an integer or a decimal number of precision of any type, and subsequent intervals such as N1, N2, and N3 are merely used as time interval identifiers without any size or linear or nonlinear relationship. This does not limit this application.

It should be noted that the forced charging loop counting state may be specifically an active protection measure for the battery, which performs logic control on charging/discharging of the battery when a discharging state of the battery reaches a low-power threshold, thereby preventing the battery from being over-discharged.

### Embodiment 4

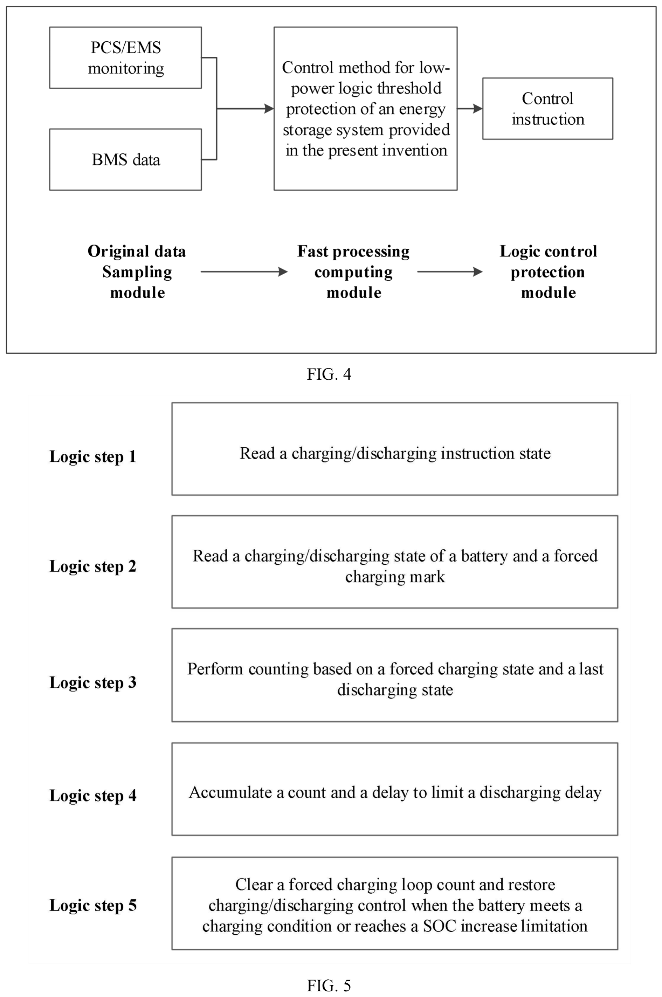

In this embodiment, refer to FIG. 4, which is a diagram of a modularized structure of a control method for low-power logic threshold protection of an energy storage system according to an embodiment of this application. The modularized structure includes PCS/EMS monitoring, BMS data, the control method for low-power logic threshold protection of an energy storage system provided in this application, and a control instruction.

An original data sampling module is configured to read a charging/discharging state of a battery, and recognize and monitor a real-time state of the battery.

A fast processing computing module is configured to perform the control method for low-power logic threshold protection of an energy storage system provided in this application.

A logic control protection module is configured to invoke the control method for low-power logic threshold protection of an energy storage system provided in this application to implement logic control on charging/discharging of a battery.

In this embodiment, bidirectional data monitoring based on an inverter (PCS/EMS) and a battery pack (BMS) promotes resilience development of an energy storage battery pack BMS. The control method for low-power logic threshold protection of an energy storage system provided in this application is invoked to implement logic control on charging/discharging of the battery when a discharging state of the battery reaches a low-power threshold, thereby preventing the battery from being over-discharged.

### Embodiment 5

In this embodiment, refer to FIG. 5, which is a flowchart of another control method for low-power logic threshold protection of an energy storage system according to an embodiment of this application. The method specifically includes the following steps.

Logic step 1: Read a charging/discharging instruction state.

Logic step 2: Read a charging/discharging state of a battery and a forced charging mark.

Logic step 3: Perform counting based on a forced charging state and a last discharging state.

Logic step 4: Accumulate a count and a delay to limit a discharging delay.

Logic step 5: Clear a forced charging loop count and restore charging/discharging control when the battery meets a charging condition or reaches a SOC increase limitation.

In this embodiment, this application can prevent the battery from being over-discharged, prevent cyclic charging and discharging in a short time from causing serious damage to health of a battery cell of a battery pack, and avoid irreversible damages such as shortening a service life of the battery.

### Embodiment 6

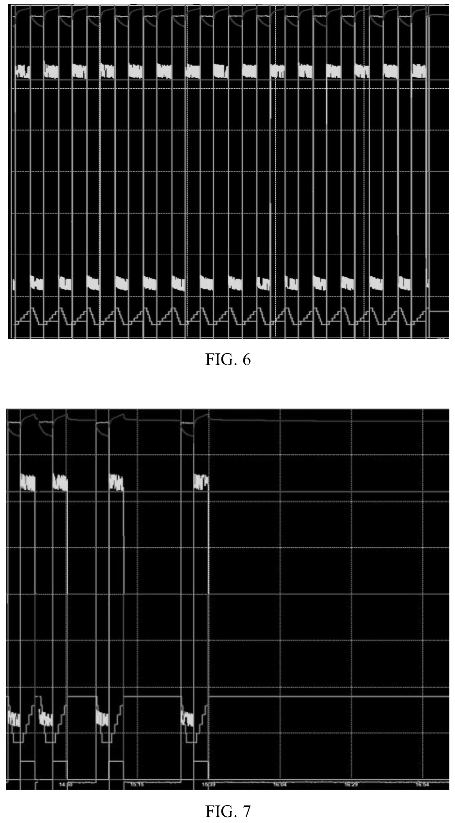

In this embodiment, refer to FIG. 6, which is a waveform diagram of a logic control instruction unilaterally issued by an energy storage battery-based BMS system according to an embodiment of this application. When a remaining capacity of a battery is less than a specified threshold, a battery protection logic control instruction is enabled. A BMS communication system issues a discharging prohibition flag bit or a low battery voltage alarm signal, a level 3 or higher alarm for forced disconnection of a loop relay, and the like.

The specified threshold may be 5%, 4%, or the like of a total power.

In this embodiment, the logic control instruction unilaterally issued by the energy storage battery-based BMS system lacks active protection control logic and employs a singular control method, and only stops discharging or disconnects a discharging loop, resulting in incomplete systematic protection for an energy storage system and absence of an active protection capability. This is not conducive to maintenance of physical discharging characteristics of the energy storage battery. Singular disconnection of the discharging loop may lead to a failure in timely charging for the battery during power supply restoration on a user side, persistent battery self-discharge, BMS system downtime, and even irreversible damage to cell characteristics.

### Embodiment 7

In this embodiment, refer to FIG. 7, which is a diagram of an effect of a control method for low-power logic threshold protection of an energy storage system according to an embodiment of this application. This application is applied to an active protection system EMS of an inverter, and provides important steps for process control of a PCS of the energy storage system in the new energy technology industry.

When a discharging state of a battery reaches a low-power threshold, this application is invoked to implement logic control on charging/discharging of the battery, thereby preventing the battery from being over-discharged.

Further, when a charging condition remains continuously unmet, a low-power discharging prohibition protection control management instruction is implemented for the battery until a charging condition for a battery pack is met next time, and charging/discharging control is restored, thereby eliminating potential safety hazards that may arise from short-term frequent charging/discharging of an energy storage battery pack, including but not limited to high-temperature flammability, explosion, and battery health degradation.

### Embodiment 8

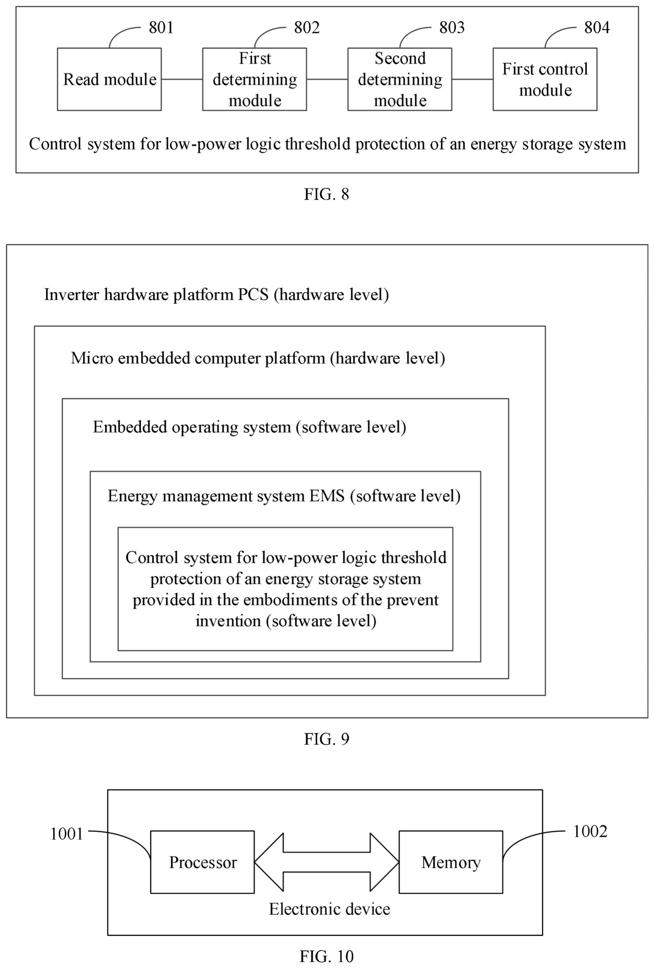

Based on Embodiment 1, as shown in FIG. 8, which is a schematic diagram of a structure of a control system for low-power logic threshold protection of an energy storage system according to an embodiment of this application. The control system for low-power logic threshold protection of an energy storage system is configured to perform the control method for low-power logic threshold protection of an energy storage system provided in the embodiments of this application. The control system for low-power logic threshold protection of an energy storage system includes:
a read module 801, configured to read a charging/discharging instruction state of a battery of the energy storage system;
a first determining module 802, configured to determine a real-time state of the battery based on the charging/discharging instruction state of the battery;
a second determining module 803, configured to determine, based on the real-time state of the battery, whether a remaining capacity of the battery is less than a preset low-power threshold; and
a first control module 804, configured to perform low-power logic threshold protection control management on the battery of the energy storage system if the remaining capacity of the battery is less than the preset low-power threshold.

Optionally, the first control module 804 includes:
a first control sub-module, configured to perform low-power discharging prohibition protection control management on the battery of the energy storage system and determine whether a charging condition is met if the remaining capacity of the battery is less than a preset first low-power threshold; and
a second control sub-module, configured to maintain low-power operation for timely user control management if the charging condition is not met and energy needs to be continuously provided.

Optionally, the system further includes:
a first determining sub-module, configured to request a forced charging state and determine whether the charging condition is met if the battery continuously provides energy and the remaining capacity of the battery is less than a preset second low-power threshold; and
a second control module, configured to send a low-power discharging prohibition protection control management instruction to the energy storage system if the charging condition is not met and the forced charging state is requested, where the preset second low-power threshold is less than the preset first low-power threshold.

Optionally, the system further includes:
a first processing module, configured to enter a forced charging loop counting state and charge the battery to reach and maintain the preset first low-power threshold if the charging condition is met and the forced charging state is requested; and
a second processing module, configured to continuously implement, by the system, the low-power discharging prohibition protection control management instruction after the remaining capacity of the battery reaches and is maintained at the preset first low-power threshold and the charging condition remains continuously unmet.

Optionally, the system further includes:
a third determining module, configured to determine, when the battery is in a charging state, whether the battery is in the forced charging state;
a counting module, configured to count the forced charging state if the battery is in the forced charging state to obtain a forced charging count value;
a fourth determining module, configured to determine a count value of a last discharging state of the battery when the battery is in a discharging state; and
a fifth determining module, configured to determine the forced charging loop counting state of the battery based on the forced charging count value and the count value of the last discharging state of the battery.

Optionally, the system further includes:
a third processing module, configured to clear a forced charging loop count and restore charging/discharging control after the remaining capacity of the battery reaches and is maintained at the preset first low-power threshold and when the charging condition is met.

### Embodiment 9

Based on Embodiment 8, refer to FIG. 9, which is a schematic diagram of a structure of a real-time operating system for an embedded computer in a hybrid energy storage inverter according to an embodiment of this application. The real-time operating system includes: a hardware computer platform and a control system for low-power logic threshold protection of an energy storage system, where the hardware computer platform is provided with an energy management system, and the control system for low-power logic threshold protection of an energy storage system provided in the foregoing embodiment is embedded into the management system of the hardware computer platform.

In this embodiment, this application may run in the real-time operating system for an embedded computer in a hybrid energy storage inverter. An inverter (PCS) serves as the hardware computer platform, the hardware platform is provided with the energy management system (EMS), and the control system for low-power logic threshold protection of an energy storage system in this application is embedded into the EMS.

In this application, objectives of safe and sustainable process control of a new energy storage system are further achieved by adding a core control device (embedded in the inverter) PCS/EMS system function without increasing hardware costs and additional overheads. Through this application, potential safety hazards that may arise from short-term frequent charging/discharging of an energy storage battery pack can be eliminated, including but not limited to high-temperature explosion, and battery health degradation.

### Embodiment 10

Refer to FIG. 10. FIG. 10 is a schematic diagram of a structure of an electronic device according to an embodiment of this application. As shown in FIG. 10, the electronic device includes a memory 1002, a processor 1001, and a computer program of a control method for low-power logic threshold protection of an energy storage system that is stored in the memory 1002 and that is capable of running on the processor 1001.

The processor 1001 is configured to invoke the computer program stored in the memory 1002 to perform the following steps:
reading a charging/discharging instruction state of a battery of the energy storage system;
determining a real-time state of the battery based on the charging/discharging instruction state of the battery;
determining, based on the real-time state of the battery, whether a remaining capacity of the battery is less than a preset low-power threshold; and
performing low-power logic threshold protection control management on the battery of the energy storage system if the remaining capacity of the battery is less than the preset low-power threshold.

Optionally, the step of performing low-power logic threshold protection control management on the battery of the energy storage system if the remaining capacity of the battery is less than the preset low-power threshold that is performed by the processor 1001 includes:
performing low-power discharging prohibition protection control management on the battery of the energy storage system and determining whether a charging condition is met if the remaining capacity of the battery is less than a preset first low-power threshold; and
maintaining low-power operation for timely user control management if the charging condition is not met and energy needs to be continuously provided.

Optionally, after the step of maintaining low-power operation for timely user control management if the charging condition is not met and energy needs to be continuously provided, the method performed by the processor 1001 further includes:
requesting a forced charging state and determining whether the charging condition is met if the battery continuously provides energy and the remaining capacity of the battery is less than a preset second low-power threshold; and
sending a low-power discharging prohibition protection control management instruction to the energy storage system if the charging condition is not met and the forced charging state is requested, where the preset second low-power threshold is less than the preset first low-power threshold.

Optionally, after the step of requesting a forced charging state and determining whether the charging condition is met if the battery continuously provides energy and the remaining capacity of the battery is less than a preset second low-power threshold, the method performed by the processor 1001 further includes:
entering a forced charging loop counting state and charging the battery to reach and maintain the preset first low-power threshold if the charging condition is met and the forced charging state is requested; and
continuously implementing, by the system, the low-power discharging prohibition protection control management instruction after the remaining capacity of the battery reaches and is maintained at the preset first low-power threshold and the charging condition remains continuously unmet.

Optionally, before the step of entering a forced charging loop counting state and charging the battery to reach and maintain the preset first low-power threshold if the charging condition is met and the forced charging state is requested, the method performed by the processor 1001 further includes:
determining, when the battery is in a charging state, whether the battery is in the forced charging state;
counting the forced charging state if the battery is in the forced charging state to obtain a forced charging count value;
determining a count value of a last discharging state of the battery when the battery is in a discharging state; and
determining the forced charging loop counting state of the battery based on the forced charging count value and the count value of the last discharging state of the battery.

Optionally, after the step of continuously implementing, by the system, the low-power discharging prohibition protection control management instruction after the remaining capacity of the battery reaches and is maintained at the preset first low-power threshold and the charging condition remains continuously unmet, the method performed by the processor 1001 further includes:
clearing a forced charging loop count and restoring charging/discharging control after the remaining capacity of the battery reaches and is maintained at the preset first low-power threshold and when the charging condition is met.

The electronic device provided in this embodiment of this application can implement processes of the control method for low-power logic threshold protection of an energy storage system, and can achieve same beneficial effects. To avoid repetition, details are not described herein again.

An embodiment of this application further provides a computer-readable storage medium. The computer-readable storage medium stores a computer program, and when the computer program is executed by a processor, the processes of the control method for low-power logic threshold protection of an energy storage system provided in the embodiments of this application are implemented, and same technical effects can be achieved. To avoid repetition, details are not described herein again.

A person of ordinary skill in the art may understand that all or some of the procedures of the methods in the foregoing embodiments may be implemented by a computer program instructing related hardware. The computer program may be stored in a computer-readable storage medium. When the program is executed, the processes in the foregoing method embodiments may be included. The computer-readable storage medium may be a magnetic disk, an optical disc, a read-only memory (Read-Only Memory, ROM), a random access memory (Random Access Memory, RAM for short), or the like.

The foregoing disclosures are merely preferred embodiments of this application, and certainly are not intended to limit the scope of claims of this application. Therefore, equivalent changes made according to the claims of this application shall fall within the scope of this application.

## Claims

1. A control method for low-power logic threshold protection of an energy storage system, **characterized by** comprising:
reading a charging/discharging instruction state of a battery of the energy storage system;
determining a real-time state of the battery based on the charging/discharging instruction state of the battery;
determining, based on the real-time state of the battery, whether a remaining capacity of the battery is less than a preset low-power threshold; and
performing low-power logic threshold protection control management on the battery of the energy storage system if the remaining capacity of the battery is less than the preset low-power threshold.

2. The method according to claim 1, **characterized in that** the step of performing low-power logic threshold protection control management on the battery of the energy storage system if the remaining capacity of the battery is less than the preset low-power threshold comprises:
performing low-power discharging prohibition protection control management on the battery of the energy storage system and determining whether a charging condition is met if the remaining capacity of the battery is less than a preset first low-power threshold; and
maintaining low-power operation for timely user control management if the charging condition is not met and energy needs to be continuously provided.

3. The method according to claim 2, **characterized in that** after the step of maintaining low-power operation for timely user control management if the charging condition is not met and energy needs to be continuously provided, the method further comprises:
requesting a forced charging state and determining whether the charging condition is met if the battery continuously provides energy and the remaining capacity of the battery is less than a preset second low-power threshold; and
sending a low-power discharging prohibition protection control management instruction to the energy storage system if the charging condition is not met and the forced charging state is requested, wherein the preset second low-power threshold is less than the preset first low-power threshold.

4. The method according to claim 3, **characterized in that** after the step of requesting a forced charging state and determining whether the charging condition is met if the battery continuously provides energy and the remaining capacity of the battery is less than a preset second low-power threshold, the method further comprises:
entering a forced charging loop counting state and charging the battery to reach and maintain the preset first low-power threshold if the charging condition is met and the forced charging state is requested; and
continuously implementing, by the system, the low-power discharging prohibition protection control management instruction after the remaining capacity of the battery reaches and is maintained at the preset first low-power threshold and the charging condition remains continuously unmet.

5. The method according to claim 4, **characterized in that** before the step of entering a forced charging loop counting state and charging the battery to reach and maintain the preset first low-power threshold if the charging condition is met and the forced charging state is requested, the method further comprises:
determining, when the battery is in a charging state, whether the battery is in the forced charging state;
counting the forced charging state if the battery is in the forced charging state to obtain a forced charging count value;
determining a count value of a last discharging state of the battery when the battery is in a discharging state; and
determining the forced charging loop counting state of the battery based on the forced charging count value and the count value of the last discharging state of the battery.

6. The method according to claim 4, **characterized in that** after the step of continuously implementing, by the system, the low-power discharging prohibition protection control management instruction after the remaining capacity of the battery reaches and is maintained at the preset first low-power threshold and the charging condition remains continuously unmet, the method further comprises:
clearing a forced charging loop count and restoring charging/discharging control after the remaining capacity of the battery reaches and is maintained at the preset first low-power threshold and when the charging condition is met.

7. A control system for low-power logic threshold protection of an energy storage system, **characterized in that** the control system for low-power logic threshold protection of an energy storage system is configured to perform the control method for low-power logic threshold protection of an energy storage system according to any one of claims 1 to 6.

8. A real-time operating system for an embedded computer in a hybrid energy storage inverter, **characterized by** comprising: a hardware computer platform and a control system for low-power logic threshold protection of an energy storage system, wherein the hardware computer platform is provided with an energy management system, and the control system for low-power logic threshold protection of an energy storage system according to claim 7 is embedded into the management system of the hardware computer platform.

9. An electronic device, **characterized by** comprising a memory, a processor, and a computer program that is stored in the memory and that is capable of running on the processor, wherein when the processor executes the computer program, the steps in the control method for low-power logic threshold protection of an energy storage system according to any one of claims 1 to 6 are implemented.

10. A computer-readable storage medium, **characterized in that** the computer-readable storage medium stores a computer program, and when the computer program is executed by a processor, the steps in the control method for low-power logic threshold protection of an energy storage system according to any one of claims 1 to 6 are implemented.
